# EUROPEAN PATENT SPECIFICATION

(11) **EP 1 497 701 B1**
(45) Date of publication and mention of the grant of the patent: **31.05.2006**
(21) Application number: 03747271.9
(22) Date of filing: 08.04.2003
(51) Int. Cl.: G05B 19/418

(54) **METHOD AND APPARATUS FOR SIMPLIFIED SYSTEM CONFIGURATION**
VERFAHREN UND VORRICHTUNG ZUR VEREINFACHTEN SYSTEMKONFIGURATION
PROCEDE ET APPAREIL DE CONFIGURATION DE SYSTEME SIMPLIFIE

(30) Priority: 23.04.2002 US 374486 P
(43) Date of publication of application: 19.01.2005
(73) Proprietor: TOKYO ELECTRON LIMITED, Minato-ku, Tokyo 107 (JP)
(72) Inventor: FUNK, Merritt, Austin, TX 78755-6718 (US); CHEN, Wei, Cedar Park, TX 78613 (US)
(74) Representative: HOFFMANN EITLE
(86) International application number: PCT/US2003/010531
(87) International publication number: WO 2003/092044

(56) References cited:
- EP-A- 1 072 967
- WO-A-01/57823

## Description

### Field of the Invention

The present invention is related to semiconductor processing systems, particularly to a semiconductor processing system which uses Graphical User Interfaces (GUIs) to simplify system configuration.

### Background of the Invention

The cost and tempo of developing new semiconductor devices and building new manufacturing plants is continually increasing. Time-to-market for new semiconductor devices is critical for the profitability and success of a company. Consumers expect the latest products and services instantaneously around the world. The need to quickly install new machines and processes is vital to meet the rapid shifts and changes in the semiconductor device market. Semiconductor manufacturing facilities also face the challenge of maintaining and controlling hundreds of complex manufacturing processes and machines. Meanwhile, the semiconductor manufacturing facilities must allow major changes in devices and processes to be developed and implemented in a relatively short period of time to create customer satisfaction.

Computers are generally used to control, monitor, and initiatize manufacturing processes. A computer is ideal for these operations given the complexities in a semiconductor manufacturing plant from the reentrant wafer flows, critical processing steps, and maintainability of the processes. Various input/output (I/O) devices are used to control and monitor process flows, wafer states, and maintenance schedules. A variety of tools exist in a semiconductor manufacturing plant to complete these complicated steps from critical operations such as etching, to batch processing, and inspections.
Most tool installations are accomplished using a display screen that is part of the graphical user interface (GUI) of a control computer containing the installation software. Installation of a semiconductor-processing tool is a time consuming procedure. The inefficient setup of a tool can result in facility downtimes that add to the overall operational cost.

Semiconductor processing facilities require constant monitoring.
Processing conditions change over time with the slightest changes in critical process parameters creating undesirable results. Small changes can easily occur in the composition or pressure of an etch gas, process module, or wafer temperature. In many cases, changes of process data reflecting deterioration of processing characteristics cannot be detected by simply referring to the process data displayed. It is difficult to detect early stage abnormalities and characteristic deterioration of a process. Oftentimes prediction and pattern recognition offered by advanced process control (APC) is necessary.

Facility control is often performed by a number of different control systems having a variety of controllers. Some of the control systems may have man-machine interfaces such as touch screens, while others may only collect and display one variable such as temperature. The APC system is able to collect data tabulated for the process control system. The data collection of the monitoring system can handle univariate or multivariate data, the analysis and display of the data, and have the ability to select the process variables to collect. Various conditions in a process are monitored by different sensors provided in each of the process modules, and data of the monitored conditions is transferred and accumulated in a control computer. If the process data is displayed and detected automatically, the process conditions of a mass-production line can be set and controlled through statistical process control (SPC) charts.
From the international patent application WO-A-0157823 a method and an apparatus for web-based tool management are known, which can be employed in a semi-conductor fabrication environment. A plurality of clients facilitates user interactions with a plurality of automated manufacturing tools. Within the clients, the tool management facilities are provided via a standard web-browser. The user can log in via a log in page. The entered user name and password are compared with an entry in a list maintained by a server. Via a graphical display the user can edit and therefore change attributes of a tool object model, which provides a logical description in an automatic control environment of a physical tool "on the factory floor".

### Summary of the Invention

Accordingly, it is an object of the present invention to provide a Graphical User Interface (GUI) for configuring and initializing a semiconductor processing system in which the GUI comprises a web-based logon screen; and a plurality of configuration screens, including at least one system configuration screen, at least one module configuration screen, at least one sensor configuration screen and at least one alarm configuration screen.

It is another object of the present invention to provide a method of using a Graphical User Interface (GUI) for configuring and initializing a semiconductor processing system, where the method comprises providing a secure logon screen. At least one processing tool is configured using at least one system configuration screen. At least one process module is configured using at least one module configuration screen. At least one sensor is configured using at least one sensor configuration screen. At least one alarm management system is configured using at least one alarm configuration screen.

### Brief Description of the Drawings

The accompanying drawings, which are incorporated in and constitute a part of the specification, illustrate presently preferred embodiments of the invention, and together with the general description given above and the detailed description of the preferred embodiments given below, serve to explain the principles of the invention. A more complete appreciation of the invention will become readily apparent with reference to the following detailed description, particularly when considered in conjunction with the accompanying drawings, in which:

FIG. 1 shows a simplified block diagram of an advanced process controlled (APC) semiconductor manufacturing system in accordance with one embodiment of the present invention;

FIG. 2 shows an exemplary view of a logon screen in accordance with one embodiment of the present invention;

FIG. 3 shows a simplified view of a main menu GUI screen in accordance with one embodiment of the present invention;

FIG. 4 shows a simplified view of a screen selection GUI screen in accordance with one embodiment of the present invention;

FIG. 5 shows a simplified view of a system configuration screen in accordance with one embodiment of the present invention;

FIGs. 6A - 6C and FIGs. 7A-7C show simplified views of additional configuration screens in accordance with one embodiment of the present invention;

FIG. 8 shows a simplified view of another configuration screen in accordance with one embodiment of the present invention;

FIG. 9 shows a simplified view of another configuration screen in accordance with one embodiment of the present invention;

FIG. 10 shows a simplified view of a module configuration screen in accordance with one embodiment of the present invention;

FIG. 11A and FIG. 11B show simplified views of additional module configuration screens in accordance with one embodiment of the present invention;

FIG. 12 shows a simplified view of a sensor instance screen in accordance with one embodiment of the present invention;

FIG. 13 shows a simplified view of another sensor instance screen in accordance with one embodiment of the present invention;

FIG. 14 shows a simplified view of another sensor instance screen in accordance with one embodiment of the present invention;

FIG. 15 shows a simplified view of a module pause screen in accordance with one embodiment of the present invention;

FIGs. 16A-16D show exemplary views of alarm configuration screens in accordance with one embodiment of the present invention; and

FIG. 17 shows a simplified view of a flow diagram for a configuration process for a semiconductor processing system in accordance with one embodiment of the present invention.

### Detailed Description of an Embodiment

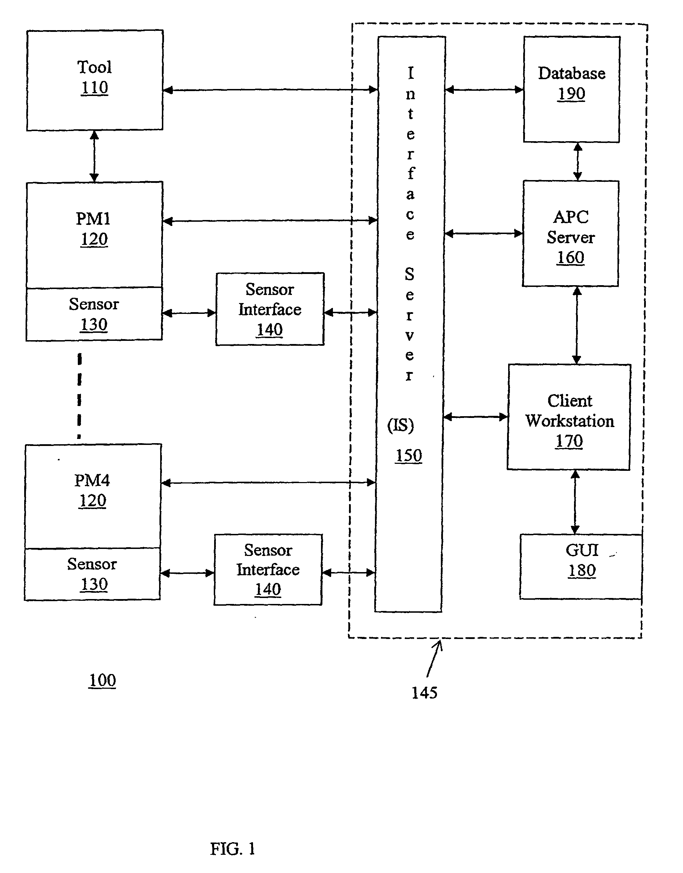

FIG. 1 shows an exemplary block diagram of an APC system in a semiconductor manufacturing environment in accordance with one embodiment of the present invention. In the illustrated embodiment, semiconductor manufacturing environment 100 comprises at least one semiconductor processing tool 110, multiple process modules 120, PM1 through PM4, multiple sensors 130 for monitoring the tool, the modules, and processes, sensor interface 140, and APC system 145. APC system 145 can comprise interface server (IS) 150, APC server 160, client workstation 170, GUI component 180, and database 190. In one embodiment, IS 150 can comprise a real-time memory database that can be viewed as a "Hub".

In the illustrated embodiment, a single tool 110 is shown along with four process modules 120, but this is not required for the invention. The APC system 145 can interface with a number of processing tools including cluster tools having one or more process modules. The APC system can be used to configure a number of processing tools including cluster tools having one or more process modules. For example, the tools can be used to perform etching, deposition, diffusion, cleaning, measurement, polishing, developing, transfer, storage, loading, and unloading processes.

In one embodiment, processing tool 110 can comprise a tool agent (not shown), which can be a software process that runs on tool 110 and which can provide event information, context information, and start-stop timing commands used to synchronize data acquisition with the tool process. Also, APC system 145 can comprise an agent client (not shown) that can be a software process that can be used to provide a connection to the tool agent.

In one embodiment, IS 150 communicates using sockets. For example, the interface can be implemented using TCP/IP socket communication. Before every communication, a socket is established. Then a message is sent as a string. After the message is sent, the socket is cancelled.

Alternately, an interface can be structured as a TCL process extended with C/C++ code, or a C/C++ process that uses a special class, such as a Distributed Message Hub (DMH) client class. In this case, the logic, which collects the process/tool events through the socket connection can be revised to insert the events and their context data into a table in IS 150.

The tool agent can send messages to provide event and context information to the APC system. For example, the tool agent can sent lot start/stop messages, batch start/stop messages, wafer start/stop messages, recipe start/stop messages, and process start/stop messages. In addition, the tool agent can be used to send and/or receive set point data and to send and/or receive maintenance counter data.

When a processing tool comprises internal sensors, this data can be sent to the IS 150 and APC server 160. Data files can be used to transfer this data. For example, some processing tools can create trace files that are compressed in the tool when they are created. Compressed and/or uncompressed files can be transferred. When trace files are created in the processing tool, the trace data may or may not include end point detection (EPD) data. The trace data provides important information about the process. The trace data can be updated and transferred after the processing of a wafer is completed. Trace files are be transferred to the proper directory for each process. In one embodiment, tool trace data, maintenance data, and EPD data can be obtained from a processing tool 110.

In FIG 1, four process modules are shown, but this is not required for the invention. The semiconductor processing system can comprise any number of processing tools having any number of process modules associated with them and independent process modules. The APC system 145 can be used to configure any number of processing tools having any number of process modules associated with them and independent process modules. The APC system 145 can collect, provide, process, store, and display data from processes involving processing tools, process modules, and sensors.

Process modules can be identified using data such as ID, module type, gas parameters, and maintenance counters, and this data can be saved into a database. When a new process module is configured, this type of data can be provided using a module configuration panel/screen in GUI component 180. For example, the APC system can support the following module types from Tokyo Electron Limited: a Unity SCCM chamber, a Unity DRM oxide chamber, a Telius DRM oxide chamber, a Telius SCCM oxide chamber, and a Telius SCCM Poly chamber. Alternately, the APC system can support other chambers.

In the illustrated embodiment, a single sensor 130 is shown along with an associated process module, but this is not required for the invention. Any number of sensors can be coupled to a process module. Sensor 130 can comprise an OES sensor, a VIP sensor, an analog sensor, and other types of semiconductor processing sensors including digital probes. The APC data management applications can be used to collect, process, store, display, and output data from a variety of sensors.

In the APC system, sensor data can be provided by both external and internal sources. External sources can be defined using an external data recorder type; a data recorder object can be assigned to each external source; and a state variable representation can be used.

Sensor configuration information combines sensor type and sensor instance parameters. A sensor type is a generic term that corresponds to the function of the sensor. A sensor instance pairs the sensor type to a specific sensor on a specific process module and tool. At least one sensor instance is configured for each physical sensor that is attached to a tool.

For example, an OES sensor can be one type of sensor, a VI probe can be another type of sensor, and an analog sensor can be a different type of sensor. In addition, there can be additional generic types of sensors and additional specific types of sensors. A sensor type includes all of the variables that are needed to set up a particular kind of sensor at run time. These variables can be static (all sensors of this type have the same value), configurable by instance (each instance of the sensor type can have a unique value), or dynamically configurable by a data collection plan (each time the sensor is activated at run time, it can be given a different value).

A "configurable by instance" variable can be the sensor/probe IP address. This address varies by instance (for each process chamber) but does not vary from run to run. A "configurable by data collection plan" variable can be a list of harmonic frequencies. These can be configured differently for each wafer based on the context information. For example, wafer context information can include tool ID, module ID, slot ID, recipe ID, cassette ID, start time and end time. There can be many instances of the same sensor type. A sensor instance corresponds to a specific piece of hardware and connects a sensor type to the tool and/or process module (chamber). In other words, a sensor type is generic and a sensor instance is specific.

Sensor 130 can be a static or dynamic sensor. For example, a dynamic VI sensor can have its frequency range, sampling period, scaling, triggering, and offset information established at run-time using parameters provided by a data collection plan. Sensor 130 can be an analog sensor that can be static and/or dynamic. For example, analog sensors can be used to provide data for ESC voltage, matcher parameters, gas parameters, flow rates, pressures, temperatures, RF parameters, and other process related data. Sensor 130 can comprise at least one of a: VIP probe, OES sensor, analog sensor, digital sensor, and a semiconductor processing sensor.

The APC system 145 can also comprise a data management application for processing the data from sensor 130. For example, a Dynamic Loadable Library (DLL) function, written in C, can be used to parse data from sensor 130 and format it suitable for printing to the output file. The DLL function can take a string from the sensor as a parameter, and return the printable (tab-delimited) string as a second argument.

As shown is FIG. 1, sensor interface 140 can be used to provide an interface between sensor 130 and the APC system 145. For example, APC system 145 can be connected to sensor interface 140 via an intemet or intranet connection, and sensor interface 140 can be connected to sensor 130 via an intemet or intranet connection. Also, sensor interface 140 can act as a protocol converter, media converter, and data buffer. In addition, sensor interface 140 can provide real-time functions, such as data acquisition, peer-to-peer communications, and I/O scanning. Alternately, sensor interface 140 can be eliminated, and the sensor 130 can be directly coupled to APC system 145.

In one embodiment, a sensor interface can write the data points to a raw data file. For example, IS 150 can send a start command to the sensor interface to initiate data acquisition and can send a stop command to cause the file to be closed. IS 150 can then read and parse the sensor data file, process the data and post the data values into the in-memory data tables.

Alternately, the sensor interface could stream the data in real time to the IS 150. A switch could be provided to allow the sensor interface to write the file to disk. The sensor interface can also provide a method to read the file and stream the data points to the IS 150 for off-line processing and analysis.

As shown in FIG. 1, APC system 145 can comprise a database 190. Configuration data can be stored in database 190. In addition, raw data and trace data from the tool can be stored as files in the database 190. The amount of data depends on the data collection plans configured by the user, as well as the frequency with which processes are performed and processing tools are run. The data obtained from the processing tools, the processing chambers, the sensors, and the APC system is stored in tables.

In one embodiment, the tables can be implemented in the IS 150 as in-memory tables and in database 190 as persistent storage. The IS 150 can use Structured Query Language (SQL) for column and row creation as well as posting data to the tables. The tables can be duplicated in the persistent tables in database 190 (i.e., DB2 can be used) and can be populated using the same SQL statements.

In the illustrated embodiment, IS 150 can be both an in-memory real-time database and a subscription server. For example, client processes are able to perform database functions using SQL with the familiar programming model of relational data tables. In addition, the IS 150 can provide a data subscription service where the client software receives asynchronous notification whenever data that meets their selection criteria is inserted, updated, or deleted. A subscription uses the full power of an SQL select statement to specify which table columns are of interest and what row selection criteria is used to filter future data change notifications.

Because the IS 150 is both a database and a subscription server, clients can open "synchronized" subscriptions to existing table data when they are initialized. The IS 150 provides data synchronization through a publish/subscribe mechanism, in-memory data tables, and supervisory logic for marshalling events and alarms through the system. The IS 150 provides several messaging TCP/IP based technologies including sockets, UDP, and publish/subscribe.

For example, the IS 150 architecture can use multiple data hubs (i.e., SQL databases) that can provide real-time data management and subscription functions. Application modules and user interfaces use SQL messages to access and update information in the data hub(s). Due to performance limitations associated with posting run time data to the relational database, run time data is posted to in-memory data tables managed by the IS 150. The contents of these tables can be posted to the relational database at the end of wafer processing.

In the illustrated embodiment shown in FIG. 1, a single client workstation 170 is shown but this is not required for the invention. The APC system 145 can support a plurality of client workstations 170. In one embodiment, the client workstation 170 allows a user to perform configuration procedures; to view status including tool, chamber, and sensor status; to view process status; to view historical data; and to perform modeling and charting functions.

In the illustrated embodiment shown in FIG. 1, APC system 145 can comprise an APC server 160 that can coupled to IS 150, client workstation 170, GUI component 180, and database 190, but this is not required for the invention. The APC server 160 can comprise a number of applications including at least one tool-related application, at least one module-related application, at least one sensor-related application, at least one IS-related application, at least one database-related application, and at least one GUI-related application. In addition, APC server can comprise a number of configuration applications.

The APC server 160 comprises at least one computer and software that supports multiple process tools; collects and synchronizes data from tools, process modules, sensors, and probes; stores data in a database, enables the user to view existing charts; and provides fault detection. The APC server allows online system configuration, online lot-to-lot fault detection, online wafer-to-wafer fault detection, online database management, and performs multivariate analysis of summary data using models based upon historical data.

For example, APC server 160 can comprise disk space; a CPU; RAM (physical memory); hard drives; a cache; Windows 2000 server software installed; Microsoft Internet Explorer; TCP/IP Network protocol; and a network card.

APC system 145 can comprise at least one storage device that stores files containing raw data from sensors and files containing trace data from the tool. The APC system 145 can comprise a data management application that allows the user to delete older files. The APC system 145 can comprise a plurality of tables that are used to operate the system, and these tables can be stored in database 190. In addition, other computers (not shown), such as on-site or off-site computers/workstations and/or hosts, can be networked to provide functions such as data/chart viewing, SPC charting, EPD analysis, file access, for one or many tools.

As shown in FIG. 1, the APC system 145 can comprise a GUI component 180. For example, a GUI component can run as an application on the APC server 160, client workstation 170, and tool 110.

GUI component 180 enables an APC system user to perform the desired configuration, data collection, monitoring, modeling, and troubleshooting tasks with as little input as possible. The GUI design complies with the SEMI Human Interface Standard for Semiconductor Manufacturing Equipment (SEMI Draft Doc. #2783B) and with the SEMATECH Strategic Cell Controller (SCC) User-Interface Style Guide 1.0 (Technology Transfer 92061179A-ENG). Those skilled in the art will recognize that GUI panels/screens can comprise a left-to-right selection tab structure and/or a right-to-left structure, a bottom-to-top structure, a top-to-bottom structure, or a combination structure.

In addition, although the screens shown for illustration were English language versions this is not required for the invention and different languages can be used. For example, a Japanese language screen, a Chinese language screen, a Taiwanese language screen, a Korean language screen, a German language screen, and a French language screen can be used.

GUI component 180 provides a means of interaction between the APC system 145 and the user. When the GUI begins, a logon screen that validates the user identification and password can be displayed and that provides a first level of security. Desirably, users can be registered using a security application before logging on. A database check of user identification indicates an authorization level, which will streamline the GUI functions available. Selection items for which the user is not authorized can be differently and unavailable. The security system also allows a user to change an existing password. For example, the logon panel/screen can be opened from a browser tool such as Netscape or Internet Explorer. A user can enter a user ID and password in the logon fields.

Authorized users and administrators can use GUI panels/screens to modify system configuration and sensor setup parameters. The GUI component 180 can comprise a configuration component for allowing a user to configure processing tools, processing modules, sensors, and the APC system. For example, GUI configuration panels/screens can be provided for at least one of a processing tool, a processing module, a sensor, a sensor instance, a module pause, and an alarm. Configuration data can be stored in an attribute database table and can be setup with the defaults at the installation.

The GUI component 180 can comprise a status component for displaying the current status for processing tools, processing modules, sensors, and the APC system. In addition, the status component can comprise a charting component for presenting system-related and process-related data to a user using one or more different types of charts.

The GUI component can comprise a data manager component for creating, editing, and viewing strategies and plans used to collect, store, and analyze data.

Also, GUI component 180 can comprise a realtime operational component. For example, a GUI component can be coupled to a background task, and shared system logic can provide the common functionality used both by the background task and by the GUI component. Shared logic can be used to guarantee that the returned values to the GUI component are the same as the ones returned to the background task. Furthermore, the GUI component 180 can comprise an APC file management GUI component and a security component. Help panels/screens are also available. For example, help files are provided in PDF (Portable Document Format) and/or HTML format.

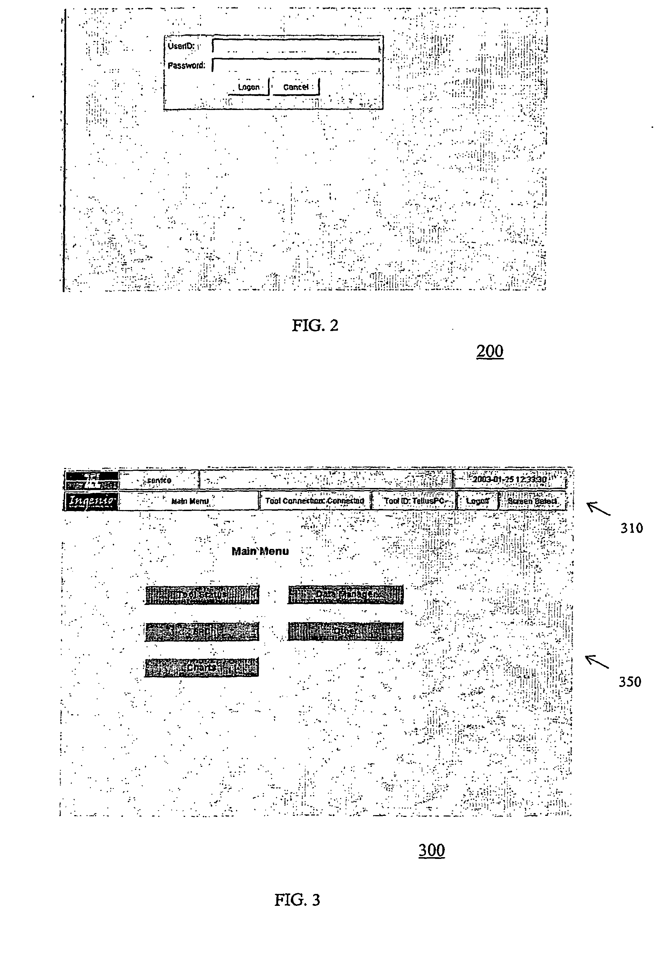

FIG. 2 shows an exemplary view of a logon screen in accordance with one embodiment of the present invention. For example, fields can be provided for a userID and a password. The logon panel 200 can provide a secure entry point. A logon panel/screen can be used to discriminate between different user levels, such as a first level user, a second level user, and a third level user. For example, a first level user can be restricted to viewing status screens; a second level user can be restricted to viewing, and creating charts; and a third level user can be allowed to create strategies, plans, alter parameters, or configure the tool and sensors.

The logon panel/screen can be opened from a browser tool, such as Netscape or Internet Explorer. A user can enter a user ID and password in the UserID and Password fields. This information can be made case sensitive and should be entered in lowercase.

FIG. 3 shows a simplified view of a menu GUI screen in accordance with one embodiment of the present invention. In the illustrated embodiment, menu GUI screen 300 comprises a title panel 310, and information panel 350. Information panel 350 can comprise a plurality of selection items. For example, selection items can be shown as buttons and can include at least one of a tool status selection item, a charts selection item, a SPC selection item, a data manager selection item, and an other selection item. In alternate embodiments, the selection items can be shown as tabs, pictures, icons, groups, menus, and/or drop-down lists.

In the illustrated embodiment, title panel 310 comprises the top portion of the screen. For example, a title panel 310 can comprise: company logo field; a product information field; a user ID field displays the ID of the current user, an alarm message field can display a message when there is an active alarm (otherwise, this field is blank); a current date and time field can display the current date and time of the server, current screen name field can display the name of the current screen; a communication status field can display current status for communications link between server and tool; a tool ID field can display the ID of the tool being monitored; a logoff field can allow a user to log off; and a screen select field can be selected to navigate between GUI screens and/or panels. Alternately, a GUI screen can comprise one or more navigation bars that can comprise selection items. In other embodiments, a title panel is not required.

From the Main Menu screen, the Tool Status button can be used to access a Tool Status screen; SPC button can be used to access a SPC chart screen; Charts button can be used to access a charting screen; Data Setup button can be used to access a Data Manager screen; and the Other button can be used to access a Screen Selection screen. Buttons can be used to control access and only allow users with the proper security level access to the screen associated with a button. For example, a button can be hidden or shown differently to indicate when a user has access rights. Some buttons will only appear on screens that can be used by third level users.

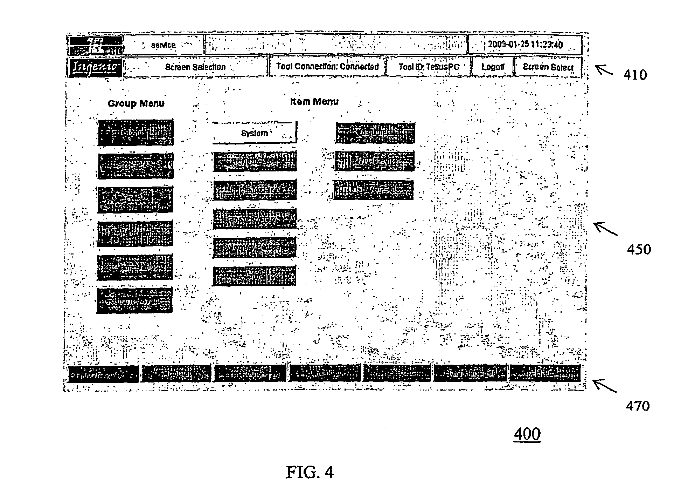

FIG. 4 shows a simplified view of a screen selection GUI screen in accordance with one embodiment of the present invention. For example, a screen select GUI screen can be accessed using a screen select selection item or using the "Other" button in FIG. 3. In the illustrated embodiment, screen select GUI. screen 400 comprises a title panel 410, an information panel 450, and a control panel 470. Information panel 450 can comprise a selection means such as a group menu that can include the following six buttons Status, Charting, Logs, Configuration, Main Menu, and Runtime Setup. In addition, information panel 450 can comprise an item menu that can appear when the Configuration button is selected. The exemplary configuration Item Menu includes nine configuration item buttons: System, Sensor Type, Module, Sensor Instance, Module Pause, Alarms, Attributes, Recipient, and Msg Content. For example, when the user selects (clicks on) one of the item menu buttons, a specific set of GUIs can be presented to the user. Available item menu buttons appear brighter than item menu buttons not available. Security procedures and user classes prevent unauthorized changes from being made by unqualified personnel.

When the user decides to switch the sensors to the latest model, or even switch from one processing tool to another, the user can start a configuration change routine. For example, configuration changes can be first done using a configuration screen at the client's workstation. After making the necessary changes, the user can sign off and download the configuration, remotely re-set the system or accept the change on-line as the case may be. After the configuration changes are in place, a new cycle of passive data collection, modeling and test can be performed.

As shown in the illustrated embodiment, a control panel 470 can comprise selection items and can be located along the bottom of the screen. For example, these selection items can enable the user to display at least one of a status screen, a chart screens, an alarm screen, a SPC screens, a data manager screen, a menu screen, and a help screen. In alternate embodiments, a control panel is not required.

GUI screens can comprise one or more panels. For example, a GUI screen desirably comprises at least one information panel. In alternate embodiments, screens, panels, and selection items can be displayed in different languages, in different configurations, and can be sized and positioned differently.

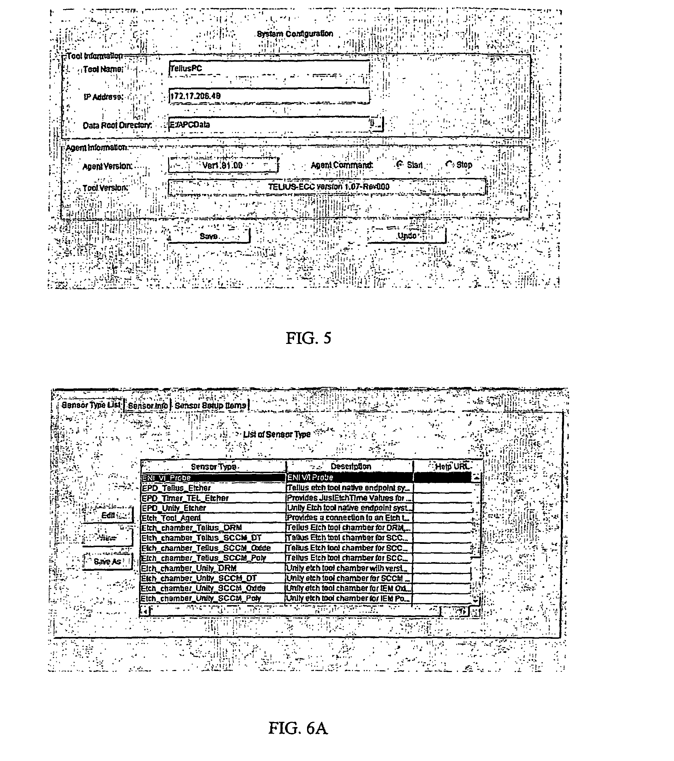

FIG. 5 shows an exemplary view of a system configuration screen in accordance with one embodiment of the present invention. In the illustrated embodiment, a processing tool configuration panel and an agent configuration panel are shown. For example, a system configuration panel can be accessed by a user using a selection item such as a button, a tab, a list item, a menu item, and/or a visual descriptor. Alternately, a processing system configuration screen/panel can be shown.

A user can use a configuration panel/screen such as shown in FIG. 5 to configure one or more processing tools and/or simulators. For example, the user can input and/or edit the following information: tool name, the type of tool, the data root directory, the IP address of the tool, the Agent version, the agent command, the tool version, and the process modules installed. As an example, an etch-related processing tool is shown, but this is not required for the invention. Alternately, other and/or additional processing tools can be shown. For example, deposition tools, diffusion tools, cleaning tools, transfer tools, measurement tools, polishing tools, and other types of semiconductor processing tools can be used. In addition, the GUI allows users to configure and use tool simulators for off-line analysis.

A tool name field can contain the name of the processing tool; an IP address field can contain the IP address for the processing tool; a data root directory field can be used to establish a path to the data directory; an upload location field that can be changed by a system administrator and can be read for debug purposes.

A configuration panel/screen can also comprise agent information. For example, the agent information can comprise an agent version field, a tool version field and agent command selection items. A tool version field can be changed during configuration and can be read for debug purposes; an agent version field can display the current version of agent installed; and an agent command selection items for determining the state of the agent.

Furthermore, a configuration panel/screen can comprises a save button, an undo button, a start agent button, and a stop agent button. A user can click the save button, to save the settings to the database for use the next time the system is initialized. A user can click the undo button, to replace new settings with the previously stored settings.

Only approved and qualified users are allowed to access and/or edit a system configuration panel/screen. This prevents problems such as loss of data or a system crash from occurring. For example, only administrators or qualified users can edit the system and sensor configuration. Generally, these parameters can be configured when the APC system is installed or reconfigured. Alternately, lists, selection tabs, and entry fields can be used.

Each processing tool can be setup and reset independently, for example, while a processing tool is operating, another processing tool can be reconfigured and/or repaired without degrading the system's performance.

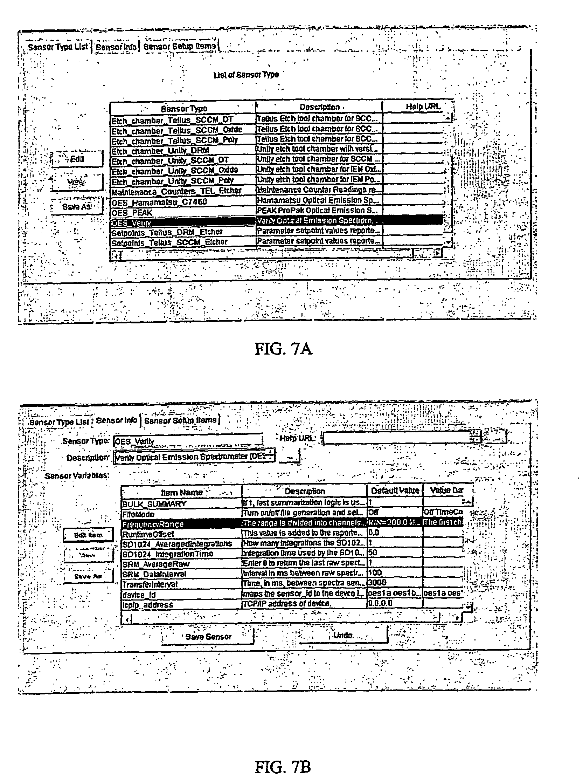

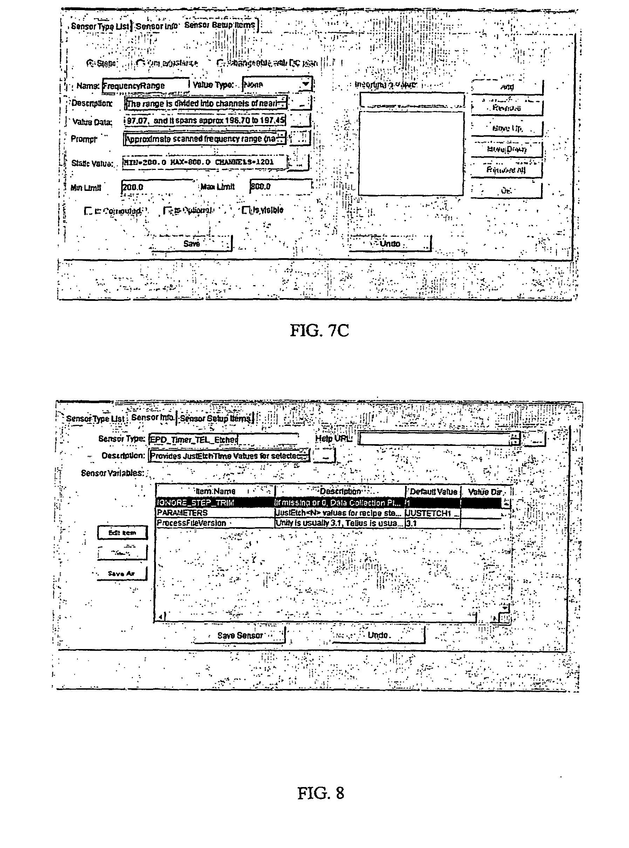

FIGs. 6A - 6C and FIGs. 7A-7C show simplified views of additional system configuration screens in accordance with one embodiment of the present invention. For example, configuration screens can include sensor configuration panels. Sensor configuration panels can be accessed by a user using a selection item such as a button, a tab, a list item, a menu item, and/or a visual descriptor. The user can use sensor configuration panels to create a new sensor type when a new sensor interface is developed or a new process tool or process module requires configuration. The APC system can comprise a pre-defined list of sensor types that are supported by the APC software. For example, changes can be made at a customer site after installation, before starting to run the process equipment, or as a re-configured example set from the factory. The sensor configuration process can include a complete definition of all the input and output parameters to be used later when creating a sensor instance or when configuring an instance of a sensor at run-time in a data collection plan. The parameters created in a configuration procedure can be displayed later in other sensor information panels/screens and data collection plan panels/screens.

For example, an OES sensor can be a type of sensor, and a VI probe can be another type of sensor. These are generic definitions for types of sensors. A sensor type includes all of the variables that are needed to set up a particular kind of sensor at run time. These variables can be static (all sensors of this type have the same value), configurable by instance (each instance of the sensor type can have a unique value), or configurable by the data collection plan (each time the sensor is activated at run time, it can be given a different value). For example, a "configurable by instance" variable is the sensor IP address. This address varies by instance (for each process chamber) but does not vary from run to run. A "configurable by data collection plan" variable is the list of harmonic frequencies. These are configured by wafer based on the context information. Wafer context information includes tool ID, module ID, slot ID, recipe ID, cassette ID, start time and end time.

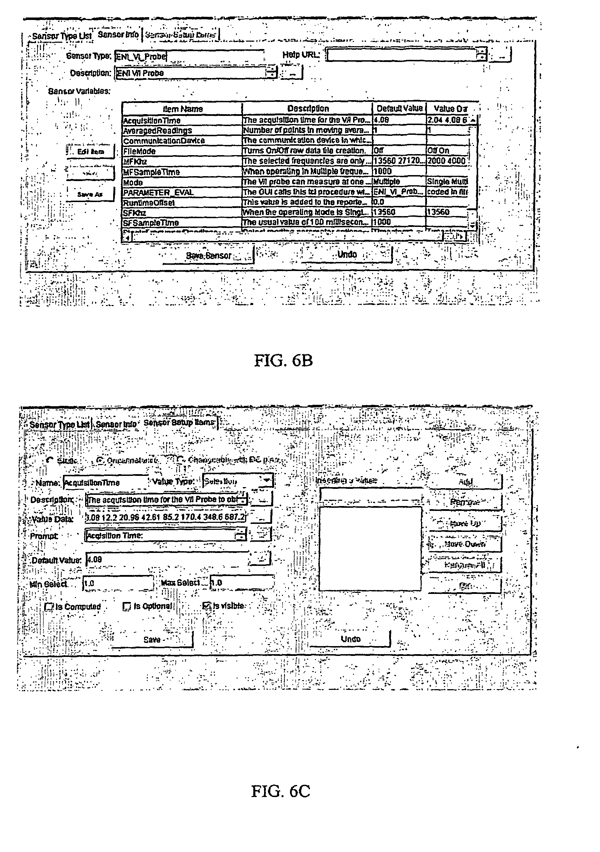

In FIG. 6A, a sensor type list panel is shown with a VI probe highlighted. In FIG. 6B, a sensor information panel is shown for a VI probe. In FIG. 6C, a sensor setup panel is shown fora VI probe. In FIG. 7A, a sensor type list panel is shown with an OES sensor highlighted. In FIG. 7B, a sensor information panel is shown for an OES sensor. In FIG. 7C, a sensor setup panel is shown for an OES sensor. For example, a user can navigate between panels using buttons and/or tabs, and a user can enter and/or change items using input fields, buttons, tabs, menus, and lists. Using an edit item, the user can select an existing sensor in order to modify the related parameters for that sensor. Using a save as item, a user can create a new type of a sensor based on an existing sensor type.

A sensor information panel, such as shown in FIG 6B or FIG. 7B can be used to provide a list of parameters associated with a particular sensor type. For example, these parameters can be described using name fields, description fields, and value fields. A sensor setup panel, such as shown in FIG 6C or FIG. 7C can be used to provide more detailed information for a particular parameter associated with a particular sensor type. For example, this more detailed parameter information can be provided using name fields, description fields, and value fields.

As an example, etch-related sensors are shown, but this is not required for the invention. Alternately, other and/or additional sensor types and process module types can be shown. For example, deposition modules, diffusion modules, cleaning modules, transfer modules, measurement modules, and other types of semiconductor processing modules can be used along with their associated sensors. For example, Langmuir probes can be used.

FIG. 8 shows a simplified view of another configuration screen in accordance with one embodiment of the present invention. Sensors can include sensors inherent in the processing tool, and configuration procedures can include using configuration panels for tool related sensors. Configuration panels for tool related sensors can be accessed by a user using a selection item such as a button, a tab, a list item, a menu item, and/or a visual descriptor. The user can use configuration panels for tool related sensors to create a new tool related sensor type when a new sensor interface is developed or a new process tool or process module requires configuration. The APC system can comprise a pre-defined list of tool related sensor types that are supported by the APC software. For example, changes can be made at a customer site after installation, before starting to run the process equipment, or as a re-configured example set from the factory. The tool related sensor configuration process can include a complete definition of all the input and output parameters to be used later when creating a sensor instance or when configuring an instance of a sensor at run-time in a data collection plan. The parameters created in this setup step can be displayed later in other sensor information panels/screens and data collection plan panels/screens.

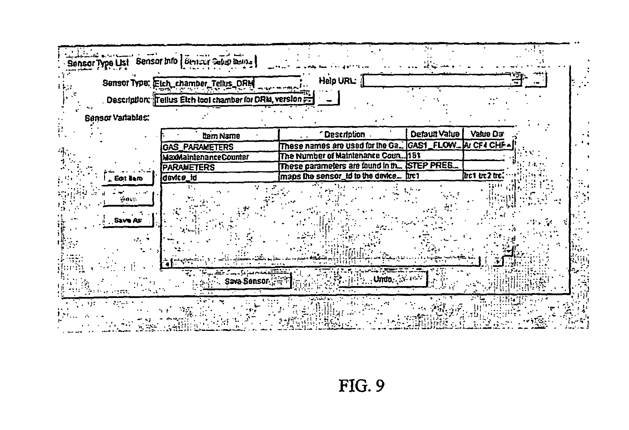

FIG. 9 shows a simplified view of another configuration screen in accordance with one embodiment of the present invention. Sensors can include sensors inherent in the process module, and configuration procedures can include using configuration panels for process module related sensors. Configuration panels for process module related sensors can be accessed by a user using a selection item such as a button, a tab, a list item, a menu item, and/or a visual descriptor. The user can use configuration panels for process module related sensors to create a new process module related sensor type when a new sensor interface is developed or a new process tool or process module requires configuration. The APC system can comprise a pre-defined list of module related sensor types that are supported by the APC software. For example, changes can be made at a customer site after installation, before starting to run the process equipment, or as a re-configured example set from the factory. The module related sensor configuration process can include a complete definition of all the input and output parameters to be used later when creating a sensor instance or when configuring an instance of a sensor at run-time in a data collection plan. The parameters created in this setup step can be displayed later in other sensor information panels/screens and data collection plan panels/screens.

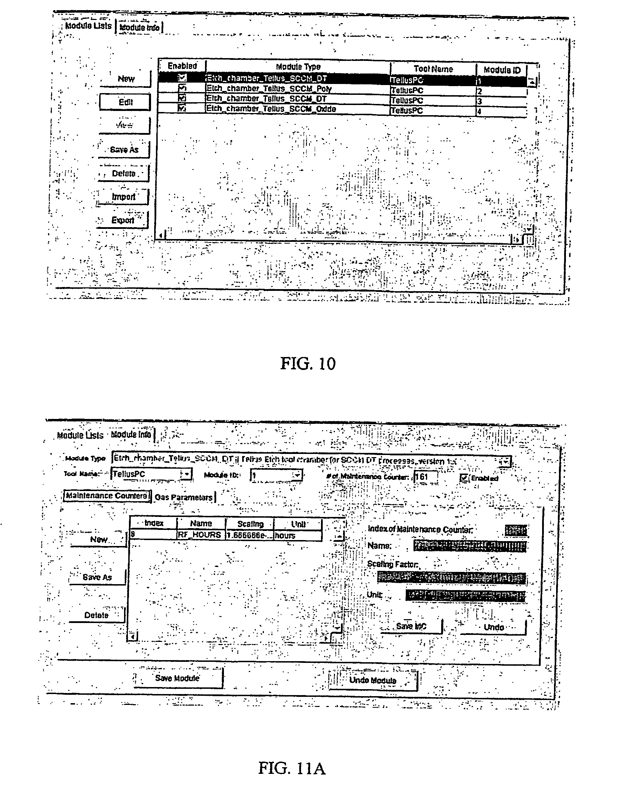

FIG. 10 shows a simplified view of a module configuration screen in accordance with one embodiment of the present invention. In the illustrated embodiment, an information panel of a module selection screen is shown. As an example, four etch-related process module types are shown, but this is not required for the invention. Alternately, other and/or additional process module types can be shown. For example, deposition modules, diffusion modules, cleaning modules, transfer modules, measurement modules, and other types of semiconductor processing modules can be used.

A module configuration panel/screen can comprise a number of buttons. For example, the buttons can include a new button, edit button, view button, save as button, delete button, import button, and export button. Using the new button, a user can create a new instance of a module type. Using the edit button, a user can edit the selected row in the table. Using the save as button, a user can provide an instance ID for a selected module type. Information related to that module instance can be copied into database. Using the delete button, a user can delete selected row from table and database. Using the import button, a user can import data from the database. Using the export button, a user can export data to the database.

In addition, the panel/screen can comprise a list of module types. For example, module information can be listed in a table. An enabled column can provide the current status for the modules listed in the table. A module type column can provide the names for the modules. A tool name column can provide the tool name associated with the module and a module ID column can provide an integer since there is only one module type per module ID.

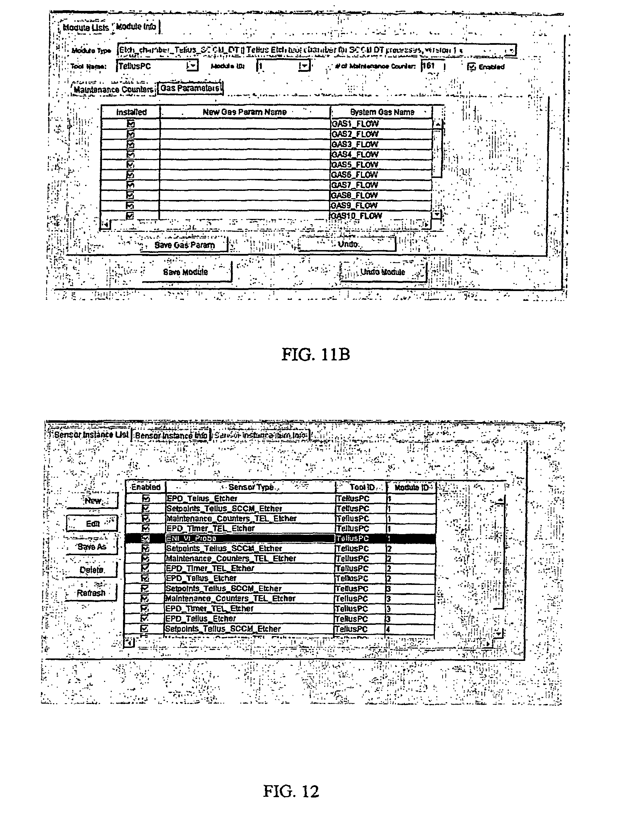

FIG. 11 A and FIG. 11 B show simplified views of additional module configuration screens in accordance with one embodiment of the present invention. As an example, information panels are shown for etch-related modules, but this is not required for the invention. Alternately, other and/or additional process module types can be shown. For example, deposition modules, diffusion modules, cleaning modules, transfer modules, measurement modules, and other types of semiconductor processing modules can be used.

Module information panels/screens can comprise a number of buttons. For example, the buttons can include a new button, save as button, and delete button. Using the new button, a user can create a new instance of a module type. Using the save as button, a user can provide an instance ID for a selected module type. Information related to that module instance can be copied into database. Using the delete button, a user can delete selected row from table and database.

In addition, the panel/screen can comprise a module type field, which can be used to display module types; a tool name field, which can be used to display the processing tool name; a module ID field, which can be used to display the module ID; and a # of maintenance counter field, which is displays an integer value of a maintenance counter. For example, a tool ID can be selected by a tool name from a drop down box, and a module ID can be selected from the drop down box from module type.

In the illustrated embodiment shown in FIG 11A, a maintenance counter information screen is shown. As an example, an RF hours counter is shown, but this is not required for the invention. Alternately, other and/or additional maintenance counter types can be shown. The number of maintenance counters depends on the tool. Maintenance counters are used to total machine state information such as RF on hours, tool on hours, and the number of instances of various problems.

A maintenance counter information panel/screen can comprise a number of buttons. For example, the buttons can include a new button, a save as button, and a delete button. A maintenance counter information panel/screen can also include an Index of maintenance counter field; a maintenance counter name field; a units field for the maintenance counter, and a value for the maintenance counter. In addition, the panel/screen can include a save MC button to save changes from an edit panel, and an undo button to go back to saved data.

Maintenance counter information can depend on the module. The user can assign a new name to a specific maintenance counter, assign it a special scale rate, and assign the tool pause function to this maintenance counter. In addition, general counters can be included with the maintenance counters, and can be configured by the user.

In the illustrated embodiment shown in FIG 11B, an additional maintenance counter information screen is shown. FIG. 11 B shows a simplified view of a gas parameters screen. As an example, a list of gases is shown, but this is not required for the invention. Alternately, other and/or additional gases can be shown. The number of gases can depend on the tool, module, and process.

Gas parameters can be a part of module instance setup. For example, a user can configure the name of gas parameters for each module. A table can be built with system gas names (gas1_flow, gas2_flow). The user can directly edit the New Gas Parameter Name column on the table. Also, a user can also select a parameter from a list of possible gas parameter names from drop down list. Each system gas parameter name can have a unique gas parameter name, and the APC software can check to make sure no duplicated gas parameters are used for different system gas parameters.

A gas parameters information panel/screen can comprise an installed field, a new gas parameter name field, and a system gas name field. In addition, the panel/screen can include a save gas parameters button to save changes from an edit panel, and an undo button to go back to saved data.

The module configuration panels/screens can provide module-related information for the user to configure. For each module, the related information, such as module type, gas parameters, and maintenance counters, can be saved into a database. Module configuration can be performed after the tool is configured and before the sensor is configured.

FIG. 12 shows a simplified view of a sensor instance screen in accordance with one embodiment of the present invention. In the illustrated embodiment, a sensor instance list panel is shown. For example, sensor instance panels/screens can be accessed by a user using a selection item such as a button, a tab, a list item, a menu item, and/or a visual descriptor. The user can use sensor instance panels/screens to create a new sensor instance when a new sensor instance is required or a new sensor instance is require for a process tool or process module. There can be many instances of the same sensor type. For example, a sensor instance can correspond to a specific piece of hardware and connects a sensor type to a tool or process module

The APC system can comprise a pre-defined list of sensor instances that are supported by the APC software. For example, changes can be made at a customer site after installation, before starting to run the process equipment, or as a re-configured example set from the factory. The sensor configuration process can include a complete definition of all the input and output parameters to be used later when creating a sensor instance or when configuring an instance of a sensor at run-time in a data collection plan. The parameters created in this setup step can be displayed later in other sensor information panels/screens and data collection plan panels/screens.

As an example, etch-related sensor types are shown, but this is not required for the invention. Alternately, other and/or additional sensor types can be shown. For example, deposition-related sensors, diffusion-related sensors, cleaning-related sensors, transfer-related sensors, measurement-related sensors, and other types of semiconductor processing sensor types can be used.

A sensor instance panel/screen can comprise a number of buttons. For example, the buttons can include a new button, an edit button, a save as button, and a delete button. In addition, sensor instance panel/screen can also comprises a list of sensors types and their status. Using a sensor instance panel/screen, a user can configure the sensors on process tools and process modules. A sensor instance panel/screen can be used during installation of the APC System, or when sensors are added, when process modules are changed, when processing tools are changed, or when tool software is upgraded with new trace or EPD parameters.

Sensor information can be shown as a table. For example, an is_enabled column can provide the current status for the sensor instances listed in the table; a sensor type column can provide names for the sensor instances; a tool ID column can provide a tool name associated with the sensor instance; and a module ID column can provide an integer since there can be only one module type per module ID.

Using the new button, a user can create a new instance of a sensor type. Using the edit button, a user can edit the selected row in the table. Using the save as button, a user can provide an instance ID for a selected sensor instance type, and the information related to that sensor instance can be copied into a database. Using the delete button, a user can delete a selected row from table and database.

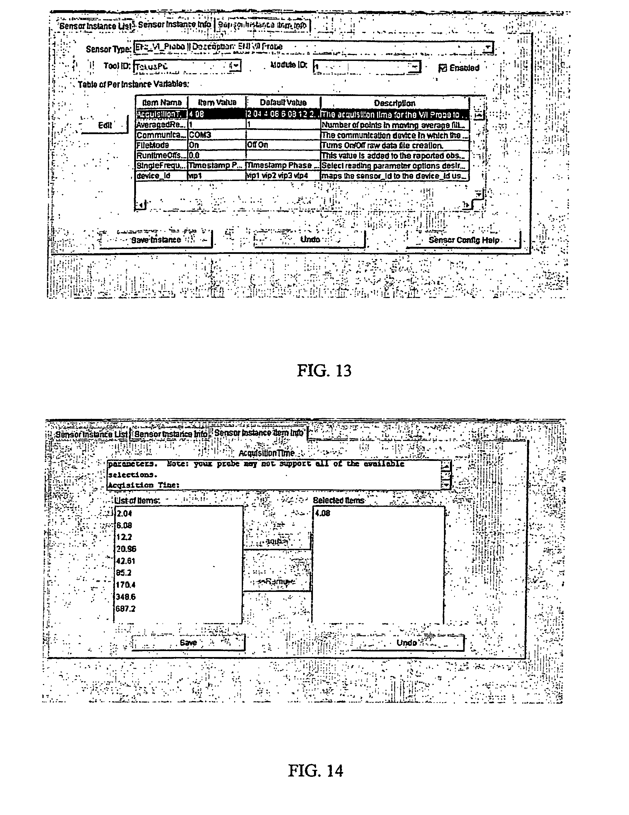

FIG. 13 shows a simplified view of another sensor instance screen in accordance with one embodiment of the present invention. In the illustrated embodiment, a sensor instance information panel is shown.

As an example, a VI probe sensor instance is shown, but this is not required for the invention. Alternately, other and/or additional sensor instances can be shown. For example, deposition-related sensors, diffusion-related sensors, cleaning-related sensors, transfer-related sensors, measurement-related sensors, and other types of semiconductor processing sensor types can be used.

Using the edit button, a user can edit the selected row in the table. Using the save instance button, the information related to a sensor instance can be copied into a database. A user can use the undo button, to replace new settings with the previously stored settings. A user can use a sensor config help button, to view help information for sensor configuration.

FIG. 14 shows a simplified view of another sensor instance screen in accordance with one embodiment of the present invention. In the illustrated embodiment, a sensor instance item panel is shown. Using a sensor instance item panel a particular parameter or a set of parameters can be configured.

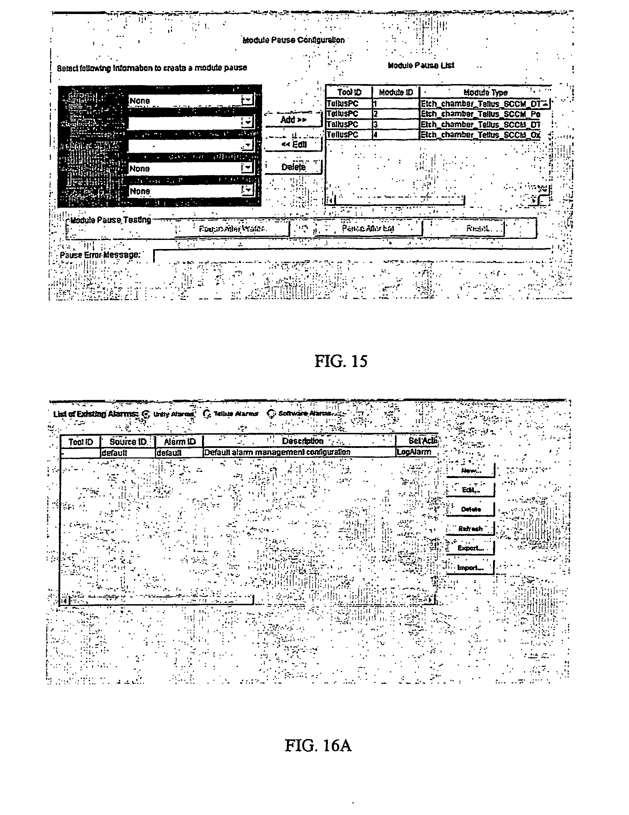

FIG. 15 shows a simplified view of a module pause configuration screen, in accordance with one embodiment of the present invention. In the illustrated embodiment, an information panel comprising module pause configuration items is shown. As an example, four process modules are shown, but this is not required for the invention. Alternately, other and/or additional process module types can be shown. For example, deposition modules, diffusion modules, cleaning modules, transfer modules, measurement modules, and other types of semiconductor processing modules can be used.

A module pause configuration panel/screen can comprise an information selection area, a module pause testing area, a module pause message area, and a module pause list area. Drop-down lists help a user configure the module pause.

A module pause configuration panel/screen can be used by a user who has a specific level of authorization, such as a process engineer. A user can configure the pause actions using analysis plans and strategies. For example, a user can determine which maintenance counter is used for a module pause when an alarm occurs. Typically, there can be only one module pause configured for each module. User can select one of the general maintenance counters to do the module pause. That is, a maintenance counter can be configured to perform a module pause function based on any measurable parameter. A user can configure the tool ID field, the module ID field, the module Instance field (indicating a name of a module), and the module counter fields using drop-down lists, for example. Only when the module instance field is enabled can a module instance list be shown in the drop down box. In addition, a list of general counter information can be listed in the drop down box that combine name and index of each maintenance counter. Using the add button, a user can add selected information to the table. Using the remove button, a user can delete selected information from the table. A pause error message display can provide error message feedback to the user.

Module pause can become effective at the end of current wafer or the end of current lot. A number of alarms can be used to trigger a tool pause, for example, a tool alarm, a fault detection alarm, or software internal errors.

FIGs. 16A-16D show exemplary views of alarm configuration screens in accordance with one embodiment of the present invention. For example, alarm configuration panels/screens can be accessed by a user using a selection item such as a button, a tab, a list item, a menu item, and/or a visual descriptor. The user can use alarm configuration panels to create a new alarm when a new alarm is required or a new alarm is require for a process tool or process module. In addition, alarm configuration panels/screens can be accessed using the "Alarms" button in FIG. 4. Alarm configuration panels/screens as shown can be used to configure an alarm management system.

In FIG. 16A, an alarm list panel is shown. As an example, a single tool-related alarm is shown, but this is not required for the invention. Alternately, other and/or additional alarms can be shown. For example, other tool related alarms, process related alarms, and software alarms can be shown.

The APC system can comprise a pre-defined list of alarms that are supported by the APC software. For example, changes can be made at a customer site after installation, before starting to run the process equipment, or as a re-configured example set from the factory. The alarm configuration process can include a complete definition of all the input and output parameters to be used later when creating an alarm instance. The parameters created in this setup step can be displayed later in other alarm information panels/screens and data collection plan panels/screens.

As shown, an alarm list panel can comprise a number of buttons. For example, the buttons can include a new button, an edit button, delete button refresh button, export button and import button. Using the new button, a user can create new alarm information. Using the edit button, a user can edit an existing alarm. Using the delete button, a user can delete an existing alarm. Using the refresh button, a user can refresh the display. Using the export button, a user can export data into the database. Using the import button, a user can import data from the database.

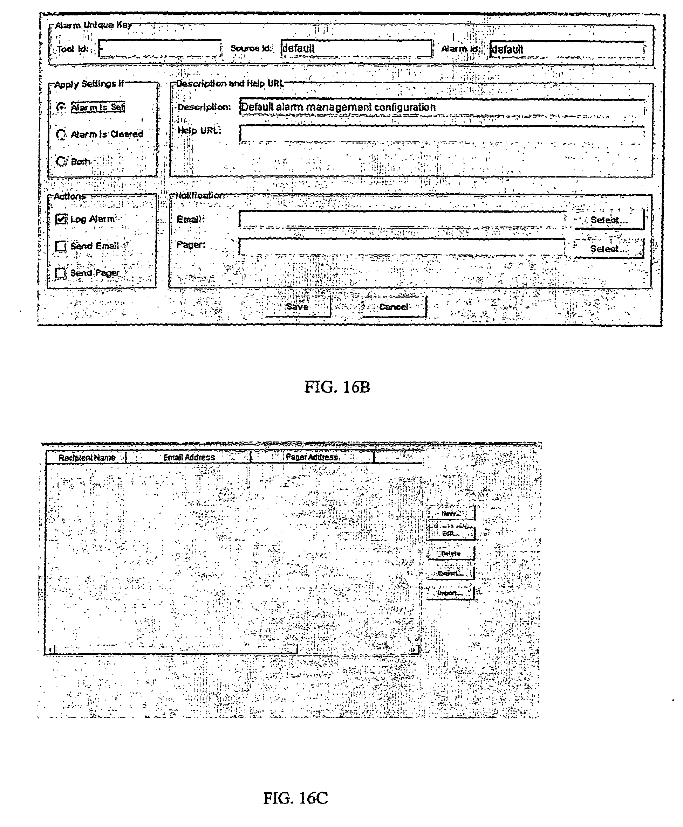

In FIG. 16B, an alarm configuration screen is shown that can comprise an alarm unique key display area, an apply settings display area, an actions display area, a description & help URL display area, notification display area, save button, and cancel button.

For example, a user can use the alarm unique key display area to configure the tool ID, source ID, and alarm ID. These fields are not editable, unless the user is configuring a new alarm. When a user is editing multiple alarms, then the value displayed for these fields can be drop-down lists. A user can use the apply settings display area to set and/or clear an alarm. A user can use the actions display area to configure the actions to be perform when the alarm occurs such as log the alarm, send an email, and/or send a page. A user can use the description & help URL display area to enter, edit, or view an alarm description along with a link to a help web page. A user can use the notification display area enter, edit, or view email and pager recipients. Select button can display a popup window from which the selection is made. In addition, a user can use the save button to save changes and the cancel button to close the panel/screen.

In FIG. 16C, a recipient setup panel is shown. For example, a recipient's name, email address, and pager address can be provided

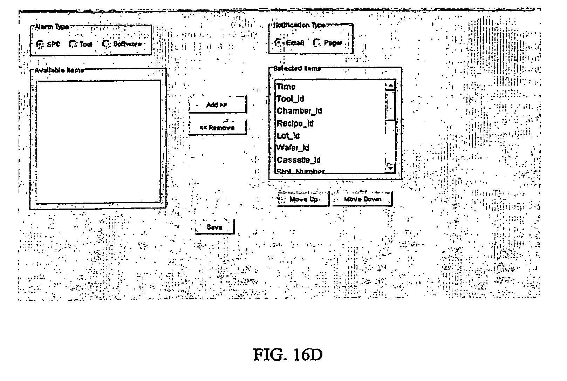

In FIG. 16D, a message setup panel is shown. For example, an alarm type field can be provided, and a notification type field can be provided. Using an add item, the user can select an item to add to an alarm message. Using a remove item, the user can select an item to remove from an alarm message. Using a save item, a user can create a new alarm.

In alternate embodiments, one or more configuration GUI panels/screens could comprise navigational tree menus. Navigational trees are used to view logical menus and associations in a tree structure using files. The navigational trees allow ease in visibility as to whether a parameter is enabled or not. For example, navigational trees can be used to display the configurations for multiple process modules.

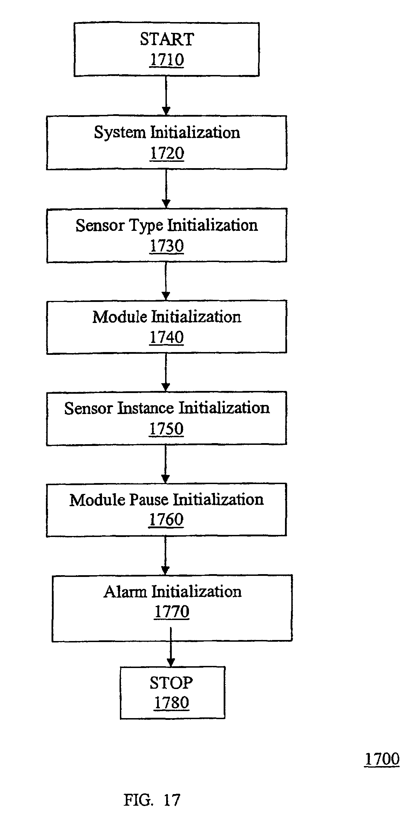

FIG. 17 shows a simplified view of a flow diagram for a configuration process for a semiconductor processing system in accordance with one embodiment of the present invention. The software and associated GUI panels/screens provides a simple, user-friendly procedure for configuring the system. Procedure 1700 starts at 1710.

At 1720, the system components are configured including the processing tools, processing modules, and the associated sensors (probes). The user can be guided though the configuration process for the system using GUI panels/screens such as those shown in FIGs. 2-16. Alternately, additional panels/screens can be provided to configure different types of processing tools, process modules, and sensors.

At 1730, a user can use a sensor configuration GUI panel/screen to create a new Sensor Type when a new sensor interface is developed or a new Tool Chamber type contains a different set of data in the Trace or EPD file. The APC System can comprise a pre-defined list of Sensor types that are supported by the base software. For example, changes can be made at a customer site after installation, before starting to run the process equipment, or as a re-configured example set from the factory.

Sensor type configuration can be performed at installation, or when adding a new sensor type. Only advanced users can perform this operation; it involves a complete definition of all the input and output parameters to be used later when creating a sensor instance or when configuring an instance of a sensor at run-time in a data collection plan. The parameters created in this setup step can be displayed later in the instance configuration (in the instance setup item table) and data collection plan (as parameters for saving and setup item to allow user to choose.

At 1740, a user can use a module configuration panel/screen to provide the module-related information required to configure a process module. For each module, most of the related information, such as module type, gas parameters, and maintenance counters, can be saved into database. Module configuration can be performed after the tool is configured and before the sensor is configured.

At 1750, a user can configure the sensors on the process modules using at least one sensor configuration GUI panel/screen. For example, sensor instance GUI panel/screen can be used during Installation of the APC System, or when sensors are added, when process modules are changed, or when Tool software is upgraded with new trace or EPD parameters.

At 1760, a user can configure the module pause data for a tool using at least one configuration GUI panel/screen. For example, a user can configure a maintenance counter that is used for module pause when an alarm occurs using the module pause configuration panel/screen. User can selects one of the general counters to do the module pause. Users can configure all pause actions under analysis plans and strategies.

At 1770, a user can use the alarm configuration panels/screens to configure one or more alarms. For example, a user can configure the alarm using a tool ID, source ID and alarm ID. A user can also set and/or clear an alarm. A user can configure the actions to be performed when the alarm occurs such as log the alarm, send an email, and/or send a page. A user can enter, edit, or view an alarm description along with a link to a help web page. A user can enter, edit, or view email and pager recipients. Procedure 1700 stops at 1780.

Function buttons may be located along the bottom and/or top of the GUI screens. Because the same function buttons are displayed on many of the screens, users can navigate to any function from any screen without having to traverse a series of menus. A logoff button can be displayed in the title panel, and it is used to log off of the system. Reminder messages can be provided when data has been modified and not saved. In addition, a help button can be displayed, and it is used to view content specific and general documentation to aid the user understand the data being presented to the user and/or the data being requested from the user.

Numerous modifications and variations of the present invention are possible in light of the above teachings. It is therefore to be understood that, within the scope of the appended claims, the invention may be practiced otherwise than as specifically described herein.

## Claims

1. An Advanced Process Control (APC) System, for managing a semiconductor processing system (100), comprising a set of Graphical User Interface (GUI) screens (180, 300, 400), the set of GUI screens (180, 300, 400) comprising:
web-based logon screen (200) for providing a secure entry point;
at least one system configuration GUI screen for configuring a number of processing tools (110) in the semiconductor processing system (100), wherein at least one system configuration screen is accessible through the logon screen;
at least one module configuration GUI screen for configuring a process module (120) coupled to a processing tool (100);
**characterized by**:
at least one sensor configuration GUI screen for configuring a sensor (130) coupled to a processing tool (110); and
at least one alarm configuration screen for configuring an alarm management system coupled to the processing tool.

2. The APC system as claimed in claim 1, wherein the plurality of system configuration screens comprises a tool configuration screen.

3. The APC system as claimed in claim 2, wherein the tool configuration screen comprises a tool name field, an IP address field, and a tool starts selection portion.

4. The APC system as claimed in claim 1, wherein the plurality of system configuration screens comprises a probe configuration screen.

5. The APC system as claimed in claim 4, wherein the probe configuration screen comprises a portion to configure a voltage/current (V/1) probe.

6. The APC system as claimed in claim 4, wherein the probe configuration screen comprises a portion to configure an Optical Emission' Spectra (OES) probe.

7. The APC system as claimed in claim 1, wherein the at least one module configuration screen comprises a module selection screen.

8. The APC system as claimed in claim 7; wherein the module selection screen comprises module information field, tool information field, module ID information field, and a module status selection portion.

9. The APC system as claimed in claim 1, wherein the at least one module configuration screen comprises a module information screen.

10. The APC system as claimed in claim 9, wherein the module information screen comprises a maintenance counter selection portion.

11. The APC system as claimed in claim 9, wherein the module information screen comprises a gas parameters selection portion.

12. The APC system as claimed in claim 1, wherein the at least one module configuration screen comprises a module pause configuration screen.

13. The APC system as claimed in claim 12, wherein the module pause configuration screen comprises module information field, tool information field, module type information field, and pause error message field.

14. The APC system as claimed in claim 1, wherein the at least one sensor configuration screen comprises a sensor type selection screen.

15. The APC system as claimed in claim 14, wherein the sensor type selection screen comprises sensor type information field, sensor information field, and a help selection portion.

16. The APC system as claimed in claim 1, wherein the at least one sensor configuration screen comprises a sensor selection screen.

17. The APC system as claimed in claim 16, wherein the sensor selection screen comprises sensor type information field, tool information field, module ID information field, and a sensor status selection portion.

18. The APC system as claimed in claim 1, wherein the at least one alarm configuration screen for configuring an alarm management system comprises an alarm configuration screen.

19. The APC system as claimed in claim 18, wherein the alarm configuration screen comprises tool information field, source information field, alarm information field, and notification information field.

20. The APC system as claimed in claim 1, wherein the set of APC GUI screens (180, 300, 400) comprises at least one screen selected from a group consisting of an English language screen, a Japanese language screen, a Chinese language screen, a Korean language screen, a German language screen, and a French language screen.

21. The APC system as claimed in claim 1, wherein the set of APC GUI screens (180, 300, 400) comprises at least one screen comprising selection tabs selected from a group consisting of left-to-right tabs, right-to-left tabs, top-to-bottom tabs, and bottom-to-top tabs.

22. The APC system as claimed in claim 1, wherein the set of APC GUI screens (180, 300, 400) comprises at least one screen having a title panel comprising company logo block to display version information, user ID block to display the ID of the current user, alarm message block to display a message when there is an active alarm, current date and time block to display the current date and time of the server, current screen name block to display the name of the current screen, communication status block to display the current status for communications link between server and tool, tool ID block to display the ID of the tool being monitored, logoff block to allow a user to log off.

23. The APC system as claimed in claim 1, wherein the set of APC GUI screens (400) comprises at least one screen having a control panel (470) having a plurality of buttons along the bottom of the screen, the buttons enabling a user to display a tool status screen, process module screen, charts screen, alarm logs screen, SPC screen, data setup screen, and help screen.

24. The APC system as claimed in claim 1, wherein the APC system (145) further comprises an APC server (160) coupled to the semiconductor processing system (100).

25. The APC system as claimed in claim 24, wherein the APC system (145) further comprises a plurality of client-based terminals (170) coupled to the APC server (160), wherein at least one client-based terminal (170) comprises a GUI (180, 300, 400) for configuring a processing tool (110) and a GUI (180, 300, 400) for configuring a processing module (120) coupled to the processing tool (110).

26. The APC system as claimed in claim 2, wherein the tool configuration screen comprises a configuration screen for a tool (110) selected from a group consisting of an etching tool, a deposition tool, a diffusion tool, a cleaning tool, a transfer tool, a metrology tool, and a loading tool.

27. A method for configuring a semiconductor processing system (100) using an Advanced Process Control (APC) System (145) comprising a set of Graphical User Interface (GUI) screens (180, 300, 400), the method comprising the steps of:
accessing a system configuration screen using a web-based logon screen (200);
configuring at least one processing tool (110) using at least one system configuration GUI screen;
configuring at least one process module (120) coupled to the at least one processing tool (110) using at least one module configuration GUI Screen;
**characterized by** the steps of:
configuring at least one sensor (130) coupled to the at least one processing tool (110) using at least one sensor configuration GUI screen; and
configuring at least one alarm management system coupled to the semiconductor processing system (100) using at least one alarm configuration GUI screen.

28. The method as claimed in claim 27, further comprising configuring the at least one processing tool using a tool configuration screen, wherein the tool configuration screen comprises a tool name field, an IP address field, and a tool starts selection portion.

29. The method as claimed in claim 27, further comprising using a probe configuration screen to configure a voltage/current(V/1) probe.

30. The method as claimed in claim 27, further comprising using a probe configuration screen to configure an Optical Emission Spectra (OES) probe.

31. The method as claimed in claim 27, further comprising configuring the at least one process module using a module selection screen, wherein the module selection screen comprises module information field, tool information field, module ID information field, and a module status selection portion.

32. The method as claimed in claim 27, further comprising configuring the at least one process module using a module information screen, wherein the module information screen comprises a maintenance counter selection portion.

33. The method as claimed in claim 27, further comprising configuring the at least one process module using a module information screen, wherein the module information screen comprises a gas parameters selection portion.

34. The method as claimed in claim 27, further comprising configuring the at least one process module using a module pause configuration screen, wherein the module pause configuration screen comprises module information field, tool information field, module type information field, and pause error message field.

35. The method as claimed in claim 27, further comprising configuring the at least one sensor using a sensor type selection screen, wherein the sensor type selection screen comprises sensor type information field, sensor information field, and a help selection portion.

36. The method as claimed in claim 27, further comprising configuring the at least one sensor using a sensor selection screen, wherein the sensor selection screen comprises sensor type information field, tool information field, module ID information field, and a sensor status selection portion.

37. The method as claimed in claim 27, further comprising configuring the at least one alarm management system using an alarm configuration screen, wherein the alarm configuration screen comprises tool information field, source information field, alarm information field, and notification information field.

## Patentansprüche

1. APC-System (APC = Advanced Process Control) bzw. System zur erweiterten Prozesssteuerung, um ein Haltleiterverarbeitungssystem (100) zu verwalten, umfassend einen Satz GUI-Bildschirme (GUI = Graphical User Interface) bzw. Bildschirmen mit grafischer Benutzeroberfläche (180, 300, 400), wobei der Satz GUI-Bildschirme (180, 300, 400) umfasst:
webbasierte Anmeldungsbildschirme (200) zur Bereitstellung eines sicheren Eingangepunktes,
wenigstens einen GUI-Bildschirm zur Systemkonfiguration, um eine Anzahl von Verarbeitungswerkzeugen (110) im Halbleiterverarbeitungssystem (100) zu konfigurieren, wobei wenigstens ein Bildschirm zur Systemkonfiguration über den Anmeldungsbildschirm zugänglich ist,
wenigstens einen GUI-Bildschirm zur Modulkonfiguration, um ein Prozessmodul (120), das an ein Verarbeitungswerkzeug (110) gekoppelt ist, zu konfigurieren,
**gekennzeichnet durch**:
wenigstens einen GUI-Bildschirm zur Sensorkonfiguration, um einen Sensor (130), der an ein Verarbeitungswerkzeug gekoppelt ist, zu konfigurieren, und
wenigstens einen Bildschirm zur Alarmkonfiguration,um ein Alarmverwaltungssystems, das an das Verarbeitungswerkzeug gekoppelt ist, zu konfigurieren.

2. APC-System nach Anspruch 1, wobei mehrere Bildschirme zur Systemkonfigurationen einen Bildschirm zur Werkzeugkonfiguration umfassen.

3. APC-System nach Anspruch 2, wobei der Bildschirm zur Werkzeugkonfiguration ein Feld Werkzeugbezeichnung, ein Feld IP-Adresse und einen Werkzeugstart-Auswahlbereich umfasst.

4. APC-System nach Anspruch 1, wobei mehrere Bildschirme zur Systemkonfiguration einen Bildschirm zur Fühlerkonfiguration umfassen.

5. APC-System nach Anspruch 4, wobei der Bildschirm zur Fühlerkonfiguration einen Bereich umfasst, um einen (U/I) -Spannungs-/Stromfühler zu konfigurieren.

6. APC-System nach Anspruch 4, wobei der Bildschirm zur Fühlerkonfiguration einen Bereich umfasst, um einen OES-Fühler (OES = Optical Emission Spectra = Optisches Emissionsspektrum zu konfigurieren.

7. APC-System nach Anspruch 1, wobei der Bildschirm zur Konfiguration von wenigstens einem Modul einen ModulAuswahlbildschirm umfasst.

8. APC-System nach Anspruch 7, wobei der Bildschirm zur Auswahl des Moduls das Feld Moduldaten, das Feld Werkzeugdaten, das Feld ID-Daten und einen Modulstatus-Auswahlbereich umfasst.

9. APC-System nach Anspruch 1, wobei der Bildschirm zur Konfiguration von wenigstens einem Modul einen Moduldatenbildschirm umfasst.

10. APC-System nach Anspruch 9, wobei der Moduldatenbildschirm einen Bereich zur Auswahl eines Wartungszählers umfasst.

11. APC-System nach Anspruch 9, wobei der Moduldatenbildschirm einen Bereich zur Auswahl von Gasparametern umfasst.

12. APC-System nach Anspruch 1, wobei der Bildschirm zur Konfiguration von wenigstens einem Modul einen Bildschirm zur Modulpausenkonfiguration umfasst.

13. APC-System nach Anspruch 12, wobei der Bildschirm zur Modulpausenkonfiguration das Feld Moduldaten, das Feld Werkzeugdaten, das Feld Modultypdaten und das Feld Pausenfehlermeldung umfasst.

14. APC-System nach Anspruch 1, wobei der Bildschirm mit wenigstens einer Sensorkonfiguration einen Bildschirm zur Auswahl des Sensortyps umfasst.

15. APC-System nach Anspruch 14, wobei der Bildschirm zur Auswahl des Sensortyps das Feld Sensortypdaten, das Feld Sensordaten und einen Hilfe-Auswahlbereich umfasst.

16. APC-System nach Anspruch 1, wobei der Bildschirm zur Konfiguration von wenigstens einem Sensor einen Sensor-Auswahlbereich umfasst.

17. APC-System nach Anspruch 16, wobei der Sensor-Auswahlbildschirm das Feld Werkzeugdaten, das Feld Modul-Identifikationsdaten und einen Sensorstatus-Auswahlbereich umfasst.

18. APC-System nach Anspruch 1, wobei der Bildschirm zur Konfiguration von mindestens einem Alarm einen Bildschirm zur Alarmkonfiguration umfasst, um ein Alarmverwaltungssystem zu konfigurieren.

19. APC-System nach Anspruch 18, wobei der Alarm-Konfigurationsbildschirm Alarm das Feld Werkzeugdaten, das Feld Sourcedaten, das Feld Alarmdaten und das Feld Meldeaten umfasst.

20. APC-System nach Anspruch 1, wobei der Satz APC-GUI-Bildschirme (180, 300, 200) mindestens einen Bildschirm umfasst, der aus einer Gruppe gewählt wird, die sich aus einem Bildschirm in englischer Sprache, einem Bildschirm in japanischer Sprache, einem Bildschirm in chinesischer Sprache, einem Bildschirm in koreanischer Sprache, einem Bildschirm in deutscher Sprache und einem Bildschirm in französischer Sprache zusammensetzt.

21. APC-System nach Anspruch 1, wobei der Satz APC-GUI-Bildschirme (180, 300, 400) mindestens einen Bildschirm umfasst, der eine Auswahl von Tabulatoren einschließt, die aus einer Gruppe linksbündiger Tabulatoren, rechtsbündiger Tabulatoren, von oben nach unten ausgerichteter Tabulatoren und von unten nach oben ausgerichteter Tabulatoren gewählt werden.

22. APC-System nach Anspruch 1, wobei der Satz APC-GUI-Bildschirme (180, 300, 400) wenigstens einen Bildschirm mit einem Titelelement umfasst mit Firmenzeichenfeld zur Anzeige der Versionsangaben, Benutzeridentifikationsfeld zur Anzeige der Identifikation des aktuellen Benutzers, Alarmmeldefeld zur Anzeige einer Meldung im Fall eines aktiven Alarms, aktuellem Datum und Zeitfeld zur Anzeige des aktuellen Datums und der Uhrzeit des Servers, aktuellem Bildschirmbezeichnungsfeld zur Anzeige des Namens des aktuellen Bildschirms, Kommunikationsstatusfeld zur Anzeige des aktuellen Status für die Kommunikationsverbindung zwischen Server und Werkzeug, Werkzeugidentifikationsfeld zur Anzeige der Identifikation des zu überwachenden Werkzeugs, Abmeldungsfeld, damit ein Benutzer sich abmelden kann.

23. APC-System nach Anspruch 1., wobei der Satz APC-GUI-Bildschirme (400) mindestens einen Bildschirm umfasst, der ein Bedienungsfeld(470) mit mehreren Schaltflächen im unteren Bildschirmreil aufweist, wobei die Schaltflächen einen Benutzer befähigen, einen Werkzeugstatusbildschirm, einen Prozessmodulbildschirm, Grafikbildschirm, Alarmprotokollbildschirm, SPC-Bildschirm, Datenaufbaubildschirm und Hilfebildschirm anzuzeigen.

24. APC-System nach Anspruch 1, wobei das APC-System (145) ferner einen APC-Server (160) umfasst, der an das Halbleiterverarbeitungssystem (100) gekoppelt ist.

25. APC-System nach Anspruch 24, bei welchem das APC-System (145) ferner mehrere kundenbasierte Endgeräte(170) umfasst, die an den APC-Server (160) gekoppelt sind, wobei mindestens ein kundenbasiertes Endgerät (170) eine grafische Benutzeroberfläche bzw. GUI (180, 300, 400) umfasst, um ein Verarbeitungswerkzeug (110) zu konfigurieren, und eine GUI (180, 300, 400), um ein Verarbeitungsmodul (120), das an das Verarbeitungswerkzeug (110) gekoppelt ist, zu konfigurieren.

26. APC-System nach Anspruch 2, wobei der Werkzeug-Konfigurationsbildschirm einen Konfigurationsbildschirm für ein Werkzeug (110) umfasst, das aus einer Gruppe gewählt wird, die aus einem Ätzwerkzeug, einem Ablagerungswerkzeug, einem Diffusionswerkzeug, einem Reinigungswerkzeug, einem Transferwerkzeug, einem Messtechnikwerkzeug und einem Beschickungswerkzeug besteht.

27. Verfahren zum Konfigurieren eines Halbleiterverarbeitungssystems (100), das ein APC-System (Advanced Process Control) bzw. System zur erweiterten Prozesssteuerung (145) benutzt, welches einen Satz grafischer Benutzeroberflächen bzw. GUI-Bildschirme (180, 300, 400) umfasst, wobei das Verfahren die Schritte umfasst zum:
zugriff auf einen Systemkonfigurationsbildschirm, der einen webbasierten Anmeldungsbildschirm (200) benutzt,
Konfigurieren von wenigstens einem Verarbeitungswerkzeug (110), das wenigstens einen GUI-Bildschirm zur Systemkonfiguration benutzt.
Konfigurieren von wenigstens einem Prozessmodul (120), dass an wenigstens ein Verarbeitungswerkzeug (110) gekoppelt ist, welches wenigstens einen GUI-Bildschirm mit Konfigurationsmodul benutzt,
**gekennzeichnet durch** die Schritte:
Konfigurieren von mindestens einem Sensor (13), der an wenigstens ein Verarbeitungswerkzeug (110) gekoppelt ist, das wenigstens einen GUI-Bildschirm zur Sensorkonfiguration benutzt, und
Konfigurieren von wenigstens einem Alarmverwaltungssystem (100), das wenigstens einen GUI-Bildschirm zur Alarmkonfiguration benutzt.

28. Verfahren nach Anspruch 27, ferner aufweisend das Konfigurieren von wenigstens einem Verarbeitungswerkzeug, das einen Bildschirm zur Werkzeugkonfiguration benutzt, wobei der Bildschirm zur Werkzeugkonfiguration ein Feld Werkzeugbezeichnung, ein Feld IP-Adresse und einen Werkzeugstart-Auswahlbereich umfasst.

29. verfahren nach Anspruch 27, ferner aufweisend den Einsatz eines Bildschirms zur Fühlerkonfiguration, um einen (U/I)-Spannungs-/Stromfühler zu konfigurieren.

30. Verfahren nach Anspruch 27, ferner aufweisend den Einsatz eines Bildschirms zur Fühlerkonfiguration, um einen OES-Fühler (OES = Optical Emission Spectra = Optisches Emissionsspektrum zu konfigurieren.

31. Verfahren nach Anspruch 27, ferner aufweisend das Konfigurieren von wenigstens einem Verarbeitungsmodul, das einen Bildschirm zur Auswahl des Moduls benutzt, wobei der Modulauswahlbildschirm das Feld Moduldaten, das Feld Werkzeugdaten, das Feld ID-Daten und einen Modulstatus-Auswahlbereich umfasst.

32. Verfahren nach Anspruch 27, ferner aufweisend das Konfigurieren von wenigstens einem Prozessmodul, das einen Moduldatenbildschirm benutzt, wobei der Moduldatenbildschirm einen Bereich zur Auswahl eines Wartungszählers umfasst.

33. Verfahren nach Anspruch 27, ferner aufweisend das Konfigurieren von wenigstens einem Prozessmodul, das einen Moduldatenbildschirm benutzt, wobei der Moduldatenbildschirm einen Bereich zur Auswahl von Gasparametern umfasst.

34. Verfahren nach Anspruch 27, ferner aufweisend das Konfigurieren von wenigstens einem Prozessmodul, das einen Bildschirm zur Modul pausenkonfiguration benutzt, wobei der Bildschirm zur Modulpausenkonfiguration das Feld Moduldaten, das Feld Werkzeugdaten, das Feld Modultypdaten und das Feld Pausenfehlermeldung umfasst.

35. Verfahren nach Anspruch 27, ferner aufweisend das Konfigurieren von wenigstens einem Sensor, der einen Bildschirm zur Auswahl des Sensortyps benutzt, wobei der Bildschirm zur Auswahl des Sensortyps das Feld Sensortypdaten, das Feld Sensordaten und einen Hilfe-Auswahlbereich umfasst.

36. Verfahren nach Anspruch 27, ferner aufweisend das Konfigurieren von wenigstens einem Sensor, der einen Sensor-Auswahlbildschirm benutzt, wobei der Sensor-Werkzeugdaten, das Feld Modul-Identifikationsdaten und einen Sensorstatus-Auswahlbereich umfasst.

37. Verfahren nach Anspruch 27, ferner aufweisend das Konfigurieren von wenigstens einem Alarmverwaltungssystem, das einen Alarm-Konfigurationsbildschirm benutzt, wobei der Bildschirm zur Alarmkonfiguration das Feld Alarmdaten und das Feld Meldedaten umfasst.

## Revendications

1. Système de commande de traitement avancé (APC), pour la gestion d'un système de traitement de semi-conducteur (100), comprenant un ensemble d'écrans (180, 300, 400) d'interface utilisateur graphique (GUI), l'ensemble d'écrans GUI (180, 300, 400) comprenant :
un écran de connexion basé sur le Web (200) pour fournir un point d'entrée sécurisé ;
au moins un écran de configuration de système GUI pour la configuration d'un nombre d'outils de traitement (110) dans le système de traitement de semi-conducteur (100), dans lequel au moins un écran de configuration de système est accessible par l'intermédiaire de l'écran de connexion ;
au moins un écran de configuration de module GUI pour la configuration d'un module de traitement (120) couplé à un outil de traitement (100) ;
**caractérisé par** :
au moins un écran de configuration de capteur GUI pour la configuration d'un capteur (130) couplé à un outil de traitement (110) ; et
au moins un écran de configuration d'alarme pour la configuration d'un système de gestion d'alarme couplé à l'outil de traitement.

2. Système APC tel que revendiqué dans la revendication 1, dans lequel la pluralité d'écrans de configuration de système comprend un écran de configuration d'outil.

3. Système APC tel que revendiqué dans la revendication 2, dans lequel l'écran de configuration d'outil comprend un champ de nom d'outil, un champ d'adresse IP, et une partie de sélection de démarrage d'outil.

4. Système APC tel que revendiqué dans la revendication 1, dans lequel la pluralité d'écrans de configuration de système comprend un écran de configuration de sonde.

5. Système APC tel que revendiqué dans la revendication 4, dans lequel l'écran de configuration de sonde comprend une partie pour configurer une sonde tension/courant (V/1).

6. Système APC tel que revendiqué dans la revendication 4 , dans lequel l'écran de configuration de sonde comprend une partie pour configurer une sonde de spectre d'émission optique (OES).

7. Système APC tel que revendiqué dans la revendication 1, dans lequel le au moins un écran de configuration de module comprend un écran de sélection de module.

8. Système APC tel que revendiqué dans la revendication 7, dans lequel l'écran de sélection de module comprend un champ d'information de module, un champ d'information d'outil, un champ d'information de module ID, et une partie de sélection d'état de module.

9. Système APC tel que revendiqué dans la revendication 1, dans lequel le au moins un écran de configuration de module comprend un écran d'information de module.

10. Système APC tel que revendiqué dans la revendication 9, dans lequel l'écran d'information de module comprend une partie de sélection de compteur de maintenance.

11. Système APC tel que revendiqué dans la revendication 9, dans lequel l'écran d'information de module comprend une partie de sélection de paramètres de gaz.

12. Système APC tel que revendiqué dans la revendication 1, dans lequel le au moins un écran de configuration de module comprend un écran de configuration de pause de module.

13. Système APC tel que revendiqué dans la revendication 12, dans lequel l'écran de configuration de pause de module comprend un champ d'information de module, un champ d'information d'outil, un champ d'information de type de module, et un champ de message d'erreur de pause.

14. Système APC tel que revendiqué dans la revendication 1, dans lequel dans lequel le au moins un écran de configuration de capteur comprend un écran de sélection de type de capteur.

15. Système APC tel que revendiqué dans la revendication 14, dans lequel l'écran de sélection de type de capteur comprend un champ d'information de type de capteur, un champ d'information de capteur, et une partie de sélection d'aide.

16. Système APC tel que revendiqué dans la revendication 1, dans lequel le au moins un écran de configuration de capteur comprend un écran de sélection de capteur.

17. Système APC tel que revendiqué dans la revendication 16, dans lequel l'écran de sélection de capteur comprend un champ d'information de type de capteur, un champ d'information d'outil, un champ d'information de module ID, et une partie de sélection d'état de capteur.

18. Système APC tel que revendiqué dans la revendication 1, dans lequel le au moins un écran de configuration d'alarme pour la configuration d'un système de gestion d'alarme comprend un écran de configuration d'alarme.

19. Système APC tel que revendiqué dans la revendication 18, dans lequel l'écran de configuration d'alarme comprend un champ d'information d'outil, un champ d'information de source, un champ d'information d'alarme, et un champ d'information de notification.

20. Système APC tel que revendiqué dans la revendication 1, dans lequel l'ensemble des écrans APC GUI (180, 300, 400) comprend au moins un écran sélectionné parmi un groupe composé d'un écran en langue anglaise, d'un écran en langue japonaise, d'un écran en langue chinoise, d'un écran en langue coréenne, d'un écran en langue allemande, et d'un écran en langue française.

21. Système APC tel que revendiqué dans la revendication 1, dans lequel l'ensemble des écrans APC GUI (180, 300, 400) comprend au moins un écran comprenant des onglets de sélection sélectionnés parmi un groupe composé d'onglets de gauche vers la droite, d'onglets de droite vers la gauche, d'onglets de haut vers le bas, et d'onglets de bas vers le haut.

22. Système APC tel que revendiqué dans la revendication 1, dans lequel l'ensemble des écrans APC GUI (180, 300, 400) comprend au moins un écran ayant un panneau de titre comprenant un bloc de symbole de compagnie pour afficher l'information de version, un bloc d'ID d'utilisateur pour afficher l'ID de l'utilisateur actuel, un bloc de message d'alarme pour afficher un message lorsqu'une alarme est active, un bloc de date et de temps actuels pour afficher la date et le temps actuels du serveur, un bloc de nom d'écran actuel pour afficher le nom de l'écran actuel, un bloc d'état de communication pour afficher l'état actuel pour la liaison de communications, entre le serveur et l'outil, un bloc d'ID d'outil pour afficher l'ID de l'outil qui est contrôlé, un bloc de fermeture de session pour permettre à un utilisateur de fermer la session.

23. Système APC tel que revendiqué dans la revendication 1, dans lequel l'ensemble des écrans APC GUI (400) comprend au moins un écran ayant un panneau de commande (470) ayant une pluralité de boutons le long de la partie inférieure de l'écran, les boutons permettant à un utilisateur d'afficher un écran d'état d'outil, un écran de module de traitement, un écran de graphiques, un écran de journaux d'alarme, un écran SPC, un écran de réglage de données, et un écran d'aide.

24. Système APC tel que revendiqué dans la revendication 1, dans lequel dans lequel le système APC (145) comprend de plus un serveur APC (160) couplé au système de traitement de semi-conducteur (100).

25. Système APC tel que revendiqué dans la revendication 24, dans lequel le système APC (145) comprend de plus une pluralité de terminaux sur une base de client (170) couplée au serveur APC (160), dans lequel au moins un terminal sur une base de client (170) comprend un GUI (180, 300, 400) pour la configuration d'un outil de traitement (110) et un GUI (180, 300, 400) pour la configuration d'un module de traitement (120) couplé à l'outil de traitement (110).

26. Système APC tel que revendiqué dans la revendication 2, dans lequel l'écran de configuration d'outil comprend un écran de configuration pour un outil (110) sélectionné parmi un groupe composé d'un outil de gravure, d'un outil de déposition, d'un outil de diffusion, d'un outil de nettoyage, d'un outil de transfert, d'un outil de métrologie, et d'un outil de chargement.

27. Procédé pour la configuration d'un système de traitement de semi-conducteur (100) utilisant un système de commande de traitement avancé (APC) (145) comprenant un ensemble d'écrans (180, 300, 400) d'interface utilisateur graphique (GUI), le procédé comprenant les étapes de :
accession à un écran de configuration de système en utilisant un écran basé sur une connexion Web (200) ;
configuration d'au moins un outil de traitement (110) en utilisant au moins un écran de configuration de système GUI ;
configuration d'au moins un module de traitement (120) couplé au au moins un outil de traitement (110) en utilisant au moins un écran de module de configuration GUI ;
**caractérisé par** les étapes de :
configuration d'au moins un capteur (130) couplé au au moins un outil de traitement (110) en utilisant au moins un écran de configuration de capteur GUI ; et
configuration d'au moins un système de gestion d'alarme couplé au système de traitement de semi-conducteur (100) en utilisant au moins un écran de configuration d'alarme GUI.

28. Procédé tel que revendiqué dans la revendication 27, comprenant de plus la configuration du au moins un outil de traitement en utilisant un écran de configuration d'outil, dans lequel l'écran de configuration d'outil comprend un champ de nom d'outil, un champ d'adresse IP, et une partie de sélection de démarrage d'outil.

29. Procédé tel que revendiqué dans la revendication 27, comprenant de plus l'utilisation d'un écran de configuration de sonde pour configurer une sonde tension/courant (V/1).

30. Procédé tel que revendiqué dans la revendication 27, comprenant de plus l'utilisation d'un écran de configuration de sonde pour configurer une sonde de spectre d'émission optique (OES).

31. Procédé tel que revendiqué dans la revendication 27, comprenant de plus la configuration du au moins un module de traitement en utilisant un écran de sélection de module, dans lequel l'écran de sélection de module comprend un champ d'information de module, un champ d'information d'outil, un champ d'information de module ID, et une partie de sélection d'état de module.

32. Procédé tel que revendiqué dans la revendication 27, comprenant de plus la configuration du au moins un module de traitement en utilisant un écran d'information de module, dans lequel l'écran d'information de module comprend une partie de sélection de compteur de maintenance.

33. Procédé tel que revendiqué dans la revendication 27, comprenant de plus la configuration du au moins un module de traitement en utilisant un écran d'information de module, dans lequel l'écran d'information de module comprend une partie de sélection de paramètres de gaz.

34. Procédé tel que revendiqué dans la revendication 27, comprenant de plus la configuration du au moins un module de traitement en utilisant un écran de configuration de pause de module, dans lequel l'écran de configuration de pause de module comprend un champ d'information de module, un champ d'information d'outil, un champ d'information de type de module, et un champ de message d'erreur de pause.

35. Procédé tel que revendiqué dans la revendication 27, comprenant de plus la configuration du au moins un capteur en utilisant un écran de sélection de type de capteur, dans lequel l'écran de sélection de type de capteur comprend un champ d'information de type de capteur, un champ d'information de capteur, et une partie de sélection d'aide.

36. Procédé tel que revendiqué dans la revendication 27, comprenant de plus la configuration du au moins un capteur en utilisant un écran de sélection de capteur, dans lequel l'écran de sélection de capteur comprend un champ d'information de type de capteur, un champ d'information d'outil, un champ d'information de module ID, et une partie de sélection d'état de capteur.

37. Procédé tel que revendiqué dans la revendication 27, comprenant de plus la configuration du au moins un système de gestion d'alarme en utilisant un écran de configuration d'alarme, dans lequel l'écran de configuration d'alarme comprend un champ d'information d'outil, un champ d'information de source, un champ d'information d'alarme, et un champ d'information de notification.
